(19) Europäisches Patentamt
European Patent Office
Office européen des brevets

(11) EP 4 745 043 A1

(12) **EUROPEAN PATENT APPLICATION**

(43) Date of publication:
20.05.2026 Bulletin 2026/21

(21) Application number: 25161481.4

(22) Date of filing: 04.03.2025

(51) International Patent Classification (IPC):
**B64G 1/10** (2006.01)    **B64G 1/50** (2006.01)
**B64G 1/66** (2006.01)

(52) Cooperative Patent Classification (CPC):
**B64G 1/10; B64G 1/506; B64G 1/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.11.2024 BG 11399824**

(71) Applicant: **Visign Ltd**
**1302 Sofia (BG)**

(72) Inventor: **Stavrev, Valentin**
**1632 Sofia (BG)**

(74) Representative: **Benatov, Samuil Gabriel et al
Dr. EMIL BENATOV & PARTNERS
6, Asen Peykov Str.
1113 Sofia (BG)**

(54) **A CHASSIS FOR SATELLITE BUS AND A STACKABLE MODULAR STAKE OF SATELLITE BUSES**

(57) The present invention relates to a chassis (6) for a satellite bus for micro- and nanosatellites. The chassis (6) has a planar configuration and is stackable with chassis (6) of other satellite buses. The construction is stable due to the connection of posts (1) and channels (2) of the chassis (6) of the stacked satellite buses.

Figure 4

EP 4 745 043 A1

## Description

TECHNICAL FIELD

The present invention relates to satellites and, more particularly satellite buses for satellites, especially micro- and nanosatellites.

PRIOR ART

Micro- and nanosatellites have gained popularity in the 21st century, flowing from progress in electronic components and systems, launching services democratisation, and so-called canisterization - deployment of nanosatellites as a secondary payload from a dispenser (canister). That way, possible interference to the primary payload and other secondary payloads is minimised, making possible low-risk ride share. CubeSat and its dispenser P-Poly have been standardised and dominated the nanosatellite launches.

Examples of CubeSat structures are disclosed in EP3339188B1, ES2806626T3, and US9248924.

CubeSats were initially envisioned as educational tools or low-cost technology demonstration platforms that could be developed and launched within one or two years. Subsequently, however, more advanced CubeSat missions have been developed and proposed, indicating that CubeSats started to transition from solely educational and technology demonstration platforms to offer opportunities for low-cost actual science missions with potential high value in science return and commercial revenue. Despite the significant progress made in CubeSat research and development, some fundamental issues, such as CubeSat's capabilities, limitations, and scientific and commercial value, need to be addressed.

The success of CubeSats was based on the standardisation of geometric dimensions, allowing joint use of launcher adaptors. However, the CubeSat design standard is no longer in line with the progress in electronic components, the limitations of stacked PCBs (printed circuit boards), and the challenges of serial production and customisation.

The chassis or structural bus for CubeSat is typically assembled from a plurality of parts fabricated by conventional methods and bolted together, making the structure expensive and complicated.

CubeSats initially used Commercial Off-The-Shelf (COTS) components for quick development, often adopting the PC104 standard. This standard used a 104-pin connector supporting various industrial interfaces, making it a common choice for early CubeSats. However, as CubeSat technology evolved, the limitations of PC104 became apparent. The need for more advanced functionality led to incompatibilities and potential failures when different components used the same pins for various purposes. As the CubeSat market expanded, manufacturers moved away from the PC104 standard, enabling more flexible power and data connections.

The stacked PC104 boards are a distinguishable feature of CubeSats. However, they have a severe limitation: Equal-size modularity is known to be suboptimal. Access to individual boards is obscured, and the assembly-disassembly process is labour-intensive and prone to errors.

The CubeSat developers need to dismantle the electronic boards and reconnect them in a so-called 'flat sat' to access the components through development and hardware/software settings.

Flat pack or planar configuration of satellites has gained popularity after higher use of CubeSats.

For example, Aerospace Company Inc. developed the so-called DiskSat with NASA support and was granted a patent US11492147B2, disclosing a satellite as a plate with a thickness smaller than the satellite's width. The apparatus also includes a plurality of contact points distributed on the face of the satellite, allowing for one or more additional satellites to be stacked upon it. Said structure is not stable in horizontal direction, and thus causes problems. Also, said structures require specific deployment structures, and cannot be used for the commercialized deployment structures used in the field.

In general, prior art solution have these drawbacks:

- Redundant, structurally inefficient framework
- Labour intensive assembly
- Incompatible to advanced digital manufacturing
- Poor access to staked PCBs during development
- Thermal management issues
- Contribution to orbital debris
- Short orbital life due to low ballistic coefficient in the same time contribution to orbital debris
- Costly labour-intensive mass production

SUMMARY OF THE INVENTION

The present invention is a new form-factor structural platform (bus) for satellites, especially for micro and nanosatellites. It features a multifunctional structure with flat pack configuration and advanced design.

The invention discloses a chassis for satellite bus, comprising a frame with cross section having at least three sides and at least three corners, said frame has a top and a bottom part. The frame has a planar configuration for housing electronic circuitry and payload, wherein each corner of the frame is bevelled and on the bevelled part of each corner of the frame there is a C-shaped channel extending from the bottom part of the frame at least partly along the height of the corner. All C-shaped channels have equal lengths and are open to the exterior of the frame. A post protrudes from the top part of the frame above each channel. In the bottom part the frame has an inner collar, said inner collar has fastening means for electronic circuitry and payload.

In a preferred embodiment of the invention, on the top part of the frame at least two of the post have a threaded hole for attaching of spring plungers.

In a preferred embodiment of the invention, it is integrally manufactured as a monoblock.

In an alternative embodiment of the invention, C-shaped channels extend along the entire length of each of the corners, and the posts extend partly along the length into the channels, in which are fixed by fastening means or welding or adhesive layer, wherein the depth of insertion of all posts in the channels is the same.

In a preferred embodiment of the invention, the frame and the posts are made of aluminium alloy such as 6061 or 7075, or AlSiMg10, or Scalmalloy or high-performance polymers such as polyether ether ketone or carbon or fiberglass. In a preferred embodiment of the invention, it is manufactured by 3D printing with CNC post-processing for adjusting tolerances on contact surfaces of the posts.

According to the invention, also, a stackable modular stake of at least two satellite buses, stacked over each other is created, wherein each of the satellite buses comprises a chassis, according to the invention, with attached to the chassis electronic circuitry for power, command and communication and optionally attitude control and navigation, and reconfigurable mission-specific payload. The diameter of the posts plus a technological gap for free axial movement is corresponding to the diameter of the channels. The protruding part of the posts of one of the chassis is inserted with said technological gap for free axial movement into the free ends of the channels of a chassis positioned above it.

In a preferred embodiment of the invention, all but the topmost posts have spring plungers which are screwed in the threaded holes of the posts on the top part of the frame, and each chassis located above spring plungers is spring loaded.

In a preferred embodiment of the invention, it includes at least one shield configured for covering electronic circuitry, the at least one shield comprising a heatsink and heatpipe.

Said shield can be made integral with the chassis.

In a preferred embodiment of the invention, at least one of the satellite buses has solar panels and or antennas, attached to the top and bottom part of the frame of its chassis.

The presented invention has evolved around two core ideas - low profile, flat form factor, and multifunction structure parametrically designed and preferably additively manufactured. The new standard aligns better with the latest developments in design and Advanced manufacturing. At the same time, it utilises the back compatibility for CubeSat specifications and modules developed for it.

Present invention has the following advantages:

- Stable construction: The chassis of the present invention provides a stable construction of stacked satellite buses, because the fixation between posts and channels of adjacent chassis.

- Ease of use with other systems: The chassis according to the invention allow to be used with standard deployment systems, which are commonly used in the field.

- Opened access to components attached to the chassis.

- Fast reconfiguration.

- Ready for serial digital production, robotic friendly, as it is made with faster digitally integrated design and manufacturing process and so it can achieve straightforward mass production.

- Ease of use in relation to load: Arranging a stable stack of printed circuit boards into a planar satellite is very advantageous, unlike in cubic satellite which is very problematic from a practical point of view and production cannot be automated. Further the invention allows more payload and less intern mass.

- Automatization: Allows production to be automated.

- Reduced Atmospheric Drag: A flat, relatively large surface area compared to its volume minimizes the satellite's cross-sectional area perpendicular to its orbital velocity. This reduces atmospheric drag, allowing for longer operational lifetimes in low Earth orbit (LEO) without requiring as much frequent station-keeping maneuvers (adjustments to maintain orbit).

- VLEO (Very low Earth orbit) optimized structure because it has variable ballistic coefficient.

- Possibility for deorbiting with no additional means.

- Efficient Solar Power Collection: A flat shape allows for efficient placement of large solar arrays. These arrays can be integrated directly into the satellite's structure, maximizing solar energy collection for power generation.

- Simplified Thermal Management: A relatively flat design can simplify thermal management strategies. The large surface area facilitates heat dissipation, especially important in LEO where variations in sunlight and shadow are frequent.

- Mass Efficiency: While not exclusively determined by shape, a flat design can potentially lead to more efficient use of mass. Flat panel technology often used in these designs can contribute to this.

- Improved Antenna Placement and Performance: A flat design allows for relatively easy integration of phased array antennas, which are crucial for efficient communication in large constellations like Starlink. The flat form factor aids in focusing the antenna beams.

- Planar configuration matches better PCB integration.

- High-density flat parking is ideal for batch launches.

- Can be used with components from many manufacturers which make smaller electronic modules that are not compatible with the common PCB standard (PC104).

- Smaller modules are more straightforward to integrate with parametrically defined enclosures.

- Intermediate configurations compatible with the COTS orbital dispenser P-POD facilitates the transition.

BRIEF DESCRIPTION OF THE FIGURES

Further in the description, the chassis for satellite bus and the stackable modular stake of satellite buses, which are the objects of the invention, are explained with preferred embodiments, given as a non-limiting the scope of the invention example, with reference to the attached figures, where:

Figure 1 is a plan view of a chassis for a satellite bus according to the invention.

Figure 2 is an axonometric view of a chassis for a satellite bus according to the invention.

Figure 3 is an axonometric view of a chassis for a satellite bus with a payload according to the invention.

Figure 4 is an axonometric view of a stack of three satellite buses according to the invention.

Figure 5 is a plan view of inserted satellite bus into a canister according to the invention with additionally shown partial view of the joint between a post and rail guides of a cannister.

Figure 6 is a partial sectional view of a shield of satellite bus according to the invention.

Figure 7 is an exploded view of a satellite bus according to the invention.

Figure 8 is an axonometric view of stacked satellite buses in a deployer according to the invention.

Figure 9 is a side view of stacked satellite buses in a deployer according to the invention.

Figure 10 shows a homological size matrix of modular line of satellite buses according to the invention.

Figure 11 is an axonometric view of a satellite buses with extended solar panels according to the invention.

Figure 12 is a side view of stack of stacked satellite buses according to the invention.

EXAMPLARY EMBODIMENTS AND OPERATION OF THE INVENTION

A few conventions on orientation and directions followed in the description:

- The central axis is Z, and the direction of the minor dimension is referred to as the 'height';
- X and Y directions are the conventional orthogonal directions;
- The positive Z direction is referred to as the usual 'Top' and the negative - 'Bottom'.

A satellite bus is essentially the backbone of a satellite, serving as its structural framework and foundation for all critical components. It provides essential support and integration for various systems, including power generation and distribution, propulsion, communication systems, and the payload itself. In the preferred (reference) implementation, the satellite bus is divided into two relatively independent portions: the first is a structurally optimised chassis housing the essential bus parts and core volume where mission-specific hardware and instruments are disposed of. The first part is predesigned and possibly pre-manufactured. The second one is the payload, which is reconfigurable according to customer preferences and the payload requirements.

The invention focuses on the chassis 6 for satellite bus, which comprises a frame 3 with planar cross section having at least three sides and at least three corners, said frame has a top and a bottom part. A preferred example of the invention discloses a frame with cross section having four sides and at four corners, i.e. in cross section the frame is rectangular, particularly - square. Other embodiments can use more sides and corners, for example pentagon, hexagon or other.

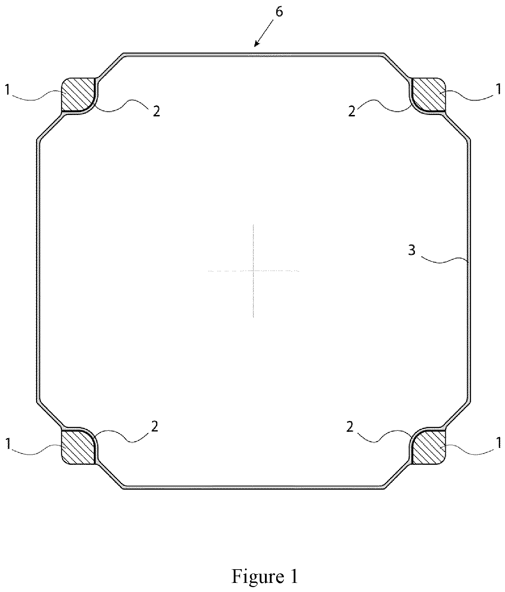

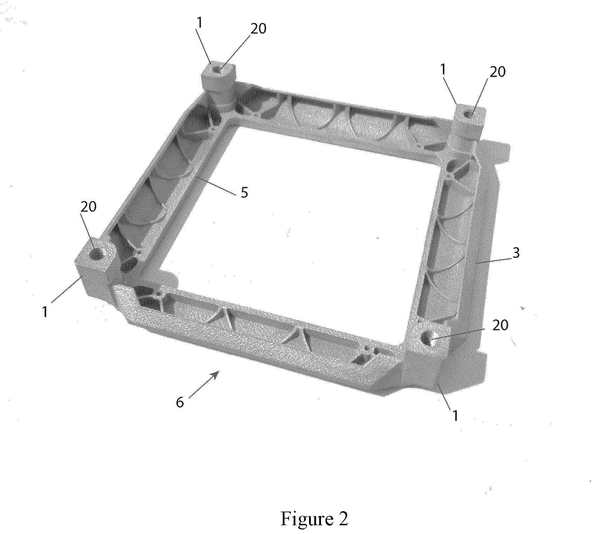

As shown on figures 1-5, each of the corners of the frame is bevelled and has C-shaped vertical channels 2 with equal lengths extending from the bottom part of the frame 3 partly or entirely along the length of the corners. Said C-shaped channels 2 are open to the exterior of the frame 3. A post 1 protrudes from the top part of the frame 3 above each channel 2. The height of the protruding part of the posts 1 can be equal to the length of the channels 2 in which they are inserted, or the height of the protruding part of the posts 1 can be less or higher than the height of the channels 2 in which they are inserted, considering that the connection between the posts 1 and the channels 2 is stable enough to hold stacked satellite buses. In the bottom part the frame 3 has an inner collar 5, said inner collar 5 has fastening means for an electronic circuitry 15 and a payload. The posts 1 can be separate elements from the frame 3 and attached firmly to walls of the channels 2 (in such case the channels 2 extend entirely along the height of the corner), or the posts 1 and the channels 2 can be manufactured integral with the frame 3 as a monoblock (in such case the channels 2 extend partly along the height of the corner).

In case the posts are separate elements, the C-shaped channels 2 extend along the entire length of each of the corners of the frame 3, and the posts extend partly along the length into the channels 2, in which are fixed by fastening means or welding or adhesive layer, wherein the depth of insertion of all posts in the channels 2 is the same. Said depth can be with different size, for example it can be half of the length of the channels 2, or less or more than the half of the length of the channels 2, considering that the connection between the posts 1 and the channels 2 is stable to hold stacked satellite buses.

The posts 1 are oriented parallel to the vertical axis Z forming slides of said frame 3. Said channels 2 are disposed in line with the posts 1 and designed to receive the top portion of the posts 1 of the next satellite forming an aggregation during the launch process. The top surface of the posts 1 may contact with the bottom surface of the next post 1 in the stack, restraining movement in the Z (longitudinal) direction. The height of the post 1 defines the spacing of the stake members.

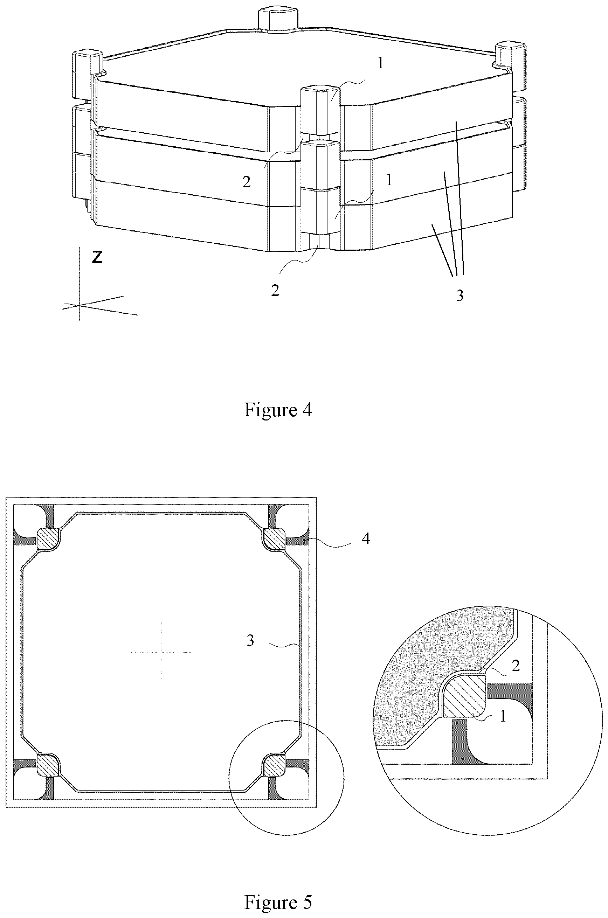

According to the invention a stackable modular stake of two or more satellite buses, stacked over each other is created (fig. 4), wherein each of the satellite buses comprises a chassis 6, according to the invention, with attached electronic circuitry 15 for power (for example battery EPS), command and communication and optionally attitude control (magnetic torques used in the attitude determination and control), navigation, backplane printed circuit boards 13 and daughter boards 14 disposed of parallel to the backplane board, primary avionics and reconfigurable mission-specific payload. The posts 1 and channels 2 are axially aligned so the protruding part of the posts 1 attached to one chassis 6 can be inserted into the channels 2 of the next chassis 6 with a minimal technological gap for free axial movement into the free ends of the channels 2 of a chassis positioned above, this achieving a stable position.

The frame 3 and the posts 1 can be made of aluminium alloy 6061 or aluminium alloy 7075, or aluminium alloy AlSiMg10, or high-performance polymers such as polyether ether ketone or carbon or fiberglass.

The slides formed by the outer surface of the posts 1 are used by the deployer's rail guides 4.

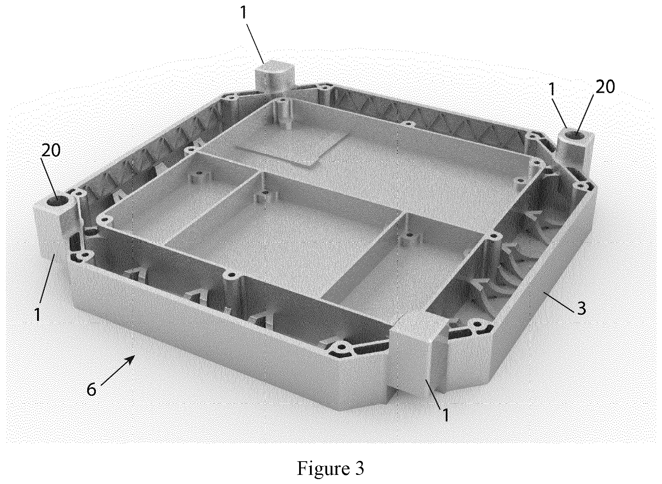

The satellite bus can include one or more shields covering the electronic circuitry 15, which comprise a heatsink 9 and heatpipe 10. Some of the shields can be made integral with the chassis (as shown on fig.3), for example by a process of additive layering, or they can be a separate detail, attached to the chassis 6. In integral embodiment of a shield with the chassis 6, the heatsink 9, in which the heatpipe 10 is integrated, is connected to the chassis as a tray, surrounded from the frame 3.

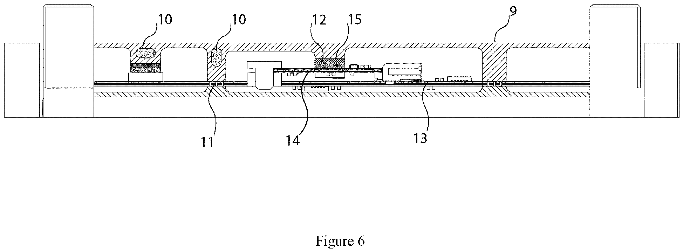

Figure 6 is a section of the conformal shield with an integrated heatsink 9 and heatpipe 10. The high heat-dissipating component, such as integrated circuits, is coupled thermally to the metal conformal shield through a thermoconductive sheet 12. The shield may incorporate heatpipes 10 manufactured in the same process of manufacturing the shield.

The ability to create conformal and tightly integrated shielding offers a significant advantage, as it allows for custom shapes and materials that can closely fit the contours of the PCB and surrounding components. Conformal shielding optimizes space and weight, which are always at a premium in satellite design and enhances the overall resilience and longevity of the CubeSat in harsh space conditions. The heatsink and possibly other thermal management components, such as heatpipes 10 and other radiator elements are integrated as advanced manufactured with minimum joints conformal shields to the chassis 6 and the load.

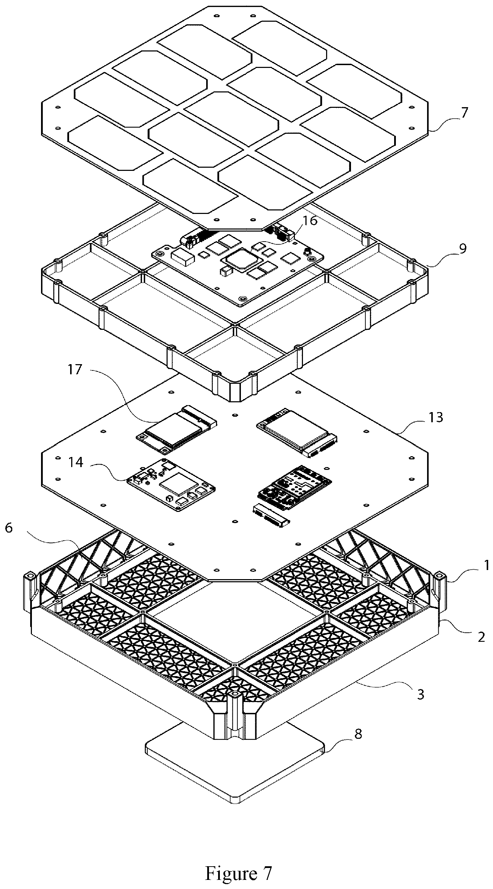

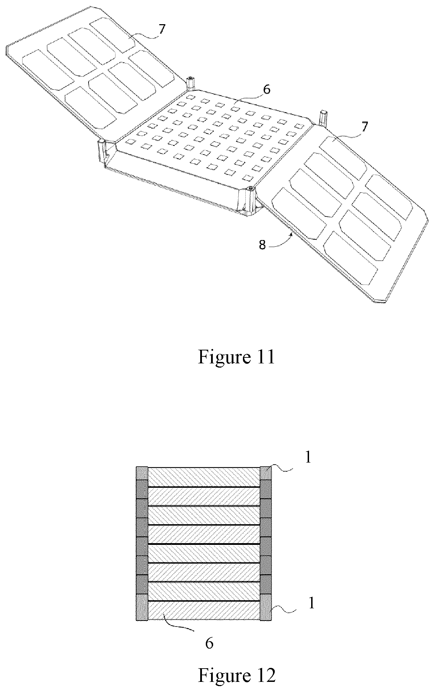

Also, at least one of the satellite buses can have deployable solar panels 7 (fig. 11) and or flat antennas 8 (fig. 7), attached to the top and bottom part of the frame 3 of its chassis 6. Usually, the solar panels 7 and the antenna 7 are located on the same detail - on one side are located the solar panels 7 and on the other side of the detail is located the antenna 7.

The described arrangement generally follows the CubeSat design. However, it is characterized by posts shifted along the Z axis and channels in which the posts accordingly are inserted. That distinguishing feature facilitates further deployment of the low height-to-width aspect ratio satellites. It better restrains the planar satellites inside the canister and makes it possible to deploy them seamlessly. The satellite bus described herein can be designed as an alternative and extension of CubeSat and be partially back compatible with P-POD standards-CubeSat orbital dispenser. Beyond CubeSat compatibility, the structural bus aims to define a new form factor standard projected as an extension. A homology modular line is proposed further in the description.

The chassis 6 has a planar configuration for housing electronic circuitry 15 and payload. The planar configuration is a configuration having a vertical size smaller than its horizontal size, for example with a difference twice or more than twice or less than twice. The low-profile (planar) configuration allows unrestricted access to electronics boards. The preferred embodiment utilizes that feature to integrate the new generation COTS and custom-made PCB modules, specifically mPCIe and M.2, widespread in mobile devices and designed for vibration and shock environments.

The planar arrangement is better adapted to incorporate modules of different sizes and shapes, and allows access to all components in the actual flight configuration. Further, the planar configuration offers better thermal management, clean interconnectivity, and better performance on VLEO. The high aspect ratio provides a variable ballistic coefficient, lower orbital decay whale the satellite is active and fast deorbiting at the end of life.

The chassis 6 can be manufactured by 3D printing (SLM) with CNC post-processing for adjusting tolerances on contact surfaces of the posts. This process combines the complex shape fabricated additively with tolerances adjusted by CNC milling. The payload buy housing for electronic modules is customised and adapted to different module and component sizes according to the particular satellite mission. A parametric model facilitates the manufacturing method's flexibility. Reconfiguration and adaptation are made by adjusting the parameters of said parametric model. Such constructions are created by parametric CAD models which enhance design flexibility and efficiency by allowing users to manipulate defined parameters seamlessly. This flexibility ensures consistency and reduces errors, enabling quick experimentation with configurations for tailored solutions and rapid prototyping.

The practical method of reconfiguring the layout is a parametric mode, which is adjusted to integrate the mission-specific components and fabricate the model using advanced manufacturing methods. In this context, advanced manufacturing methods mean a combination of AM and CNC postprocessing.

Such manufacturing process allows manufactory in a line of modular sizes. Most petite sizes are designed to be compatible with P-POD by following the CubeSat deployer specification on size, mass, and material. They defer from common CubeSats by lower aspect ratio, the staking method described above, and their internal organisation.

The multifunctional structure manufactured by LBAAM (Laser-based advanced and additive manufacturing) reduces the weight of nanosatellites and speed up development. It has better mechanical and thermal characteristics. Structural optimization in the design phase typically generates complex shapes that are non-manufacturable by traditional metalwork. The structure, made this way, is better shaped to combine mechanical support, thermal management, and electromagnetic shield functions.

Furthermore, 3D printing, in conjunction with an open structure typical of planar configuration, has opened up new possibilities for small satellite design.

The invention has a customized predesigned parametric model of the enclosure housing the electronic models of user's choice. The modules can be chosen from the user or developed in-house. As a result, a digital model of an electronic box or the entire satellite is built.

The process follows the overall sequence of PCB design and manufacturing: components choice, defining connectivity, placement, optimization, and rendering of a digital model. The digital model is then used in the manufacturing process. The process involves precise metal 3D printing and post-processing. The output is a multifunctional avionics chassis - the main body of the satellite. The payload can be integrated as a digital model, too.

In the preferable (reference) embodiment, the chassis (satellite body) 6 is a low-profile enclosure with reduced parts and possibly manufactured as a single pace part. In the reference embodiment, the loadbearing chassis 6 surrounds the payload buy. The electronic and payload buy is adapted to receive a variety of electronic modules and mission-specific payloads, as shown for example on fig. 7. Structurally, it is an incommutable loadbearing frame 3 having channels 2 and connected firmly or manufactured together with posts 1 to achieve a stacking system which carries essential components of the satellite bus and providing distributed support during the launch sequence for the payload buy. The reconfigurable payload buy houses primary electronic modules and integrate the payload. The loadbearing chassis 6 is structurally optimized and kept virtually unchanged in different realizations of the satellite bus. It carries batteries, magnetic torques, reaction wheels, and other heavy components. The chassis' invariability ensures its structural integrity without rechecking for every mission-specific reconfiguration.

The low-profile form factor avoids the hardly manageable stakes of PCBs in favour of the motherboard 13 or backboard, and daughterboards 14 are displaced parallel to the motherboard 13 to keep the low profile. Daughterboards 14 may use industry-standard mini-PCI extend (mPCIe) connectors and board format or custom-made electronic modules. PC104 board 16 format is also an option to support back comparability.

The mainboard 13 (motherboard) provides signal and power distribution between electronic modules, replacing most cables and cable harnesses. Reducing cables and connectors reduces the potential point of failure and enhances reliability. In the same direction is the migration to electronic modules inherently designed for a vibration environment and proven in practice, like mPCIe 17. The edges 11 of the PCBs are clamped between the heatsink 9 and the chassis 6, as shown in Figure 6, which improves the vibration properties of the PCBs.

The preferred implementation comprises at least three layers of electronic boards:

- At least one mainboard 13, possibly daughterboards 14;

- one overboard;

- one bottom board or flat antenna 8.

The top board typically carries photovoltaic cells, solar sensors, and a GNSS antenna. The bottom board integrates the patch antenna or antenna array. The main board 13 integrates the power distribution and signal lines between electronic modules, such as daughterboards 14 and is connected to a photovoltaic panel and antenna panel.

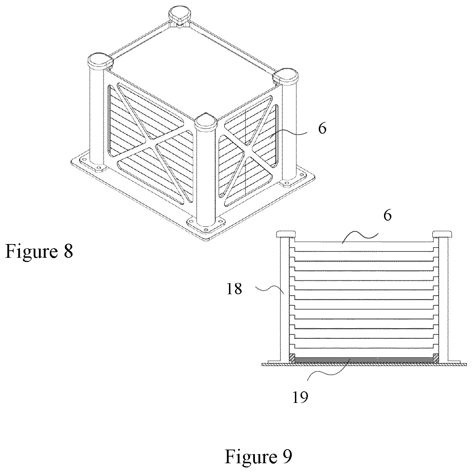

Due to their low aspect ratio, back compatibility with P-POD specifications limited the size of satellites made according to the present invention. In Figures 8 and 9 is shown an orbital deployer extended in lateral (x and y direction) to overcome such restraint. It is extended in X and Y directions following a modular step size.

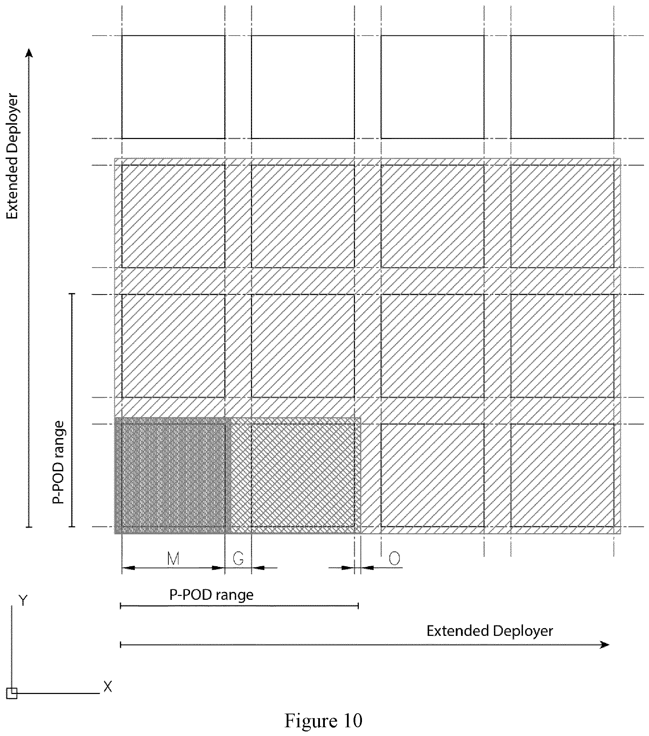

The extended dispenser employs a similar set of rail guides 4 as the P-POD, spaced wider. The homologic size matrix (fig. 10) defines a range of sizes in the lateral directions. They are generally modular and may have different sizes in the X and Y directions; in other words, rectangular in-plan satellites are possible. Said rail guides 4 are disposed on said modular matrix. In a preferred embodiment, a homologic modular matrix is defined based on basic square size M and gap width G, as shown on fig. 10.

The staked satellites, possibly for various missions and heights, are placed inside a launch dispenser or deployer canister before launch. This canister may be a standard P-POD deployer or the extension described further. Deployer structures (fig. 8 and 9) such as rail guides 4 constrain the packed stack in a lateral direction during the launch and guide the ejection from ejecting mechanism 18 of the pack during the orbital deployment (fig. 5). The stake of at least two satellites is integrated into the launch vehicle using a deployer structure that includes rails guides 4 contacting the posts 2, which act as slides, transferring the loads to dispenser rails.

The extended deployer deploying the satellites comprises:

- Rail guides 4 sized to match the slides formed from the posts 1;

- A frame to provide the structural integrity of the deployer that includes said rails;

- Restrain and release mechanism;

- Interface plate to integrate deployer with the launch vehicle adapter.

Said deployer is a P-POS canister and back compatibility achieved by:

- Mass, dimensional and material according to P-Pod specifications;
- Resize the slide posts at the bottom and the top member of the satellite stack to match the geometric requirements of the P-Pod.

The deployer system (fig. 8 and 9) also includes a piston 19 on which the satellite buses are arranged, and a restraining mechanism to keep the stack together and release it at the programmed point of the trajectory. The staked satellites stay inside the deployer system (launch canister) and are injected by the piston 19 into orbit as they are aggregated by interlocking the posts 1 into respective channels 2, wherein the deployer is still partially interlocked, as the cover is hinged to its housing. The individual satellites are separated by each other after they exit the said canister.

On the top part of the frame 3 of each chassis 6 at least two of the posts 1 can have a threaded hole 20 for attaching of spring plungers (not shown on the figures). Said spring plungers enhance the separation of satellite buses after being released from the deployment system.

All but the topmost posts 1 have spring plungers which are screwed in the threaded holes 20 of the posts on the top part of the frame 3, and each chassis 6 located above spring plungers is spring loaded.

Alternatively, the chassis 6 can be made without threaded holes and plungers, in which case the satellite buses are directly stacked over each other.

In one embodiment of present invention, in order to keep the volume of standard CubeSat, the following size matrix is used:

$$Dx = Nx*M + (Nx -1))G$$

and

$$Dy = Ny*M + (Ny -1))G$$

wherein,

Dy defines length of chassis according to present invention in the Y direction,

Dx defines length of chassis according to present invention in X direction,

M is the coefficient of enlargement

G is the gap between chassis of CubeSat, which occur when they are stacked one next to the other

Nx is the length of standard CubeSat satellite bus in the X direction, and

Ny is the length of standard CubeSat satellite bus in the Y direction.

It will be clear to those skilled in the art that various modifications of the chassis and the stackable modular stake of satellite buses are possible, which are also within the scope of the invention as defined in the appended claims. All parts of the chassis and the stackable modular stake of satellite buses can be replaced with technically equivalent elements.

The reference numbers of the technical features are included in the claims solely for the purpose of increasing the comprehensibility of the claims and, therefore, these reference numbers do not have any limiting effect on the interpretation of the elements indicated by these reference numbers.

**Claims**

1.  A chassis for satellite bus, comprising a frame (3) with cross section having at least three sides and at least three corners, said frame (3) has a top and a bottom part, wherein in the bottom part the frame (3) has an inner collar (5), said inner collar (5) has fastening means for electronic circuitry (15) and payload, **characterized in that** the frame (3) has a planar configuration for housing electronic circuitry (15) and payload, wherein each corner of the frame (3) is bevelled and on the bevelled part of each corner of the frame there is a C-shaped channel (2) extending from the bottom part of the frame (3) at least partly along the height of the corner, wherein all C-shaped channels (2) have equal lengths and are open to the exterior of the frame (3), wherein a post (1) protrudes from the top part of the frame (3) above each channel (2).

2.  A chassis for satellite bus according to claim 1, **characterized in that** on the top part of the frame (3) at least two of the posts (1) have a threaded hole (20) for attaching of spring plungers.

3.  A chassis for satellite bus according to any of the preceding claims, **characterized in that** it is integrally manufactured as a monoblock.

4.  A chassis for satellite bus according to claims 1-2, **characterized in that** the C-shaped channels (2) extend along the entire length of each of the corners, and the posts (1) extend partly along the length into the channels (2), in which the posts (1) are fixed by fastening means or welding or adhesive layer, wherein the depth of insertion of all posts (1) in the channels (2) is the same.

5.  A chassis for satellite bus according to any of the preceding claims, **characterized in that** the frame (3) and the posts (1) are made of aluminium alloy 6061 or aluminium alloy 7075, or aluminium alloy AlSiMg10, or high-performance polymers such as polyether ether ketone or carbon or fiberglass.

6.  A chassis for satellite bus according to any of the preceding claims, **characterized in that** it is manufactured by 3D printing with CNC post-processing for adjusting tolerances on contact surfaces of the posts (1).

7.  A stackable modular stake of at least two satellite buses, stacked over each other, each of them comprising a chassis (6) with attached electronic circuitry (15) and reconfigurable mission-specific payload, **characterized in that** the chassis (6) are as described in claims 1-6, and the diameter of the posts (1) plus a technological gap for free axial movement is corresponding to the diameter of the channels (2), wherein the protruding part of the posts (1) of one of the chassis (6) is inserted with said technological gap for free axial movement into the free ends of the channels (2) of a chassis (6) positioned above it.

8.  A stackable modular stake of at least two satellite buses according to claim 7, **characterized in that** all but the topmost posts (1) have spring plungers which are screwed in the threaded holes (20) of the posts (1) on the top part of the frame (3), and each chassis (6) located above spring plungers is spring loaded.

9.  A stackable modular stake of at least two satellite buses according to any of claims 7 and 8, **characterized in that** it includes at least one shield configured for covering electronic circuitry (15), the at least one shield comprising a heatsink (9) and heatpipe (10).

10. A stackable modular stake of at least two satellite buses according to any of claim 9, **characterized in that** the at least one shield is made integral with the chassis (6).

11. A stackable modular stake of at least two satellite buses according to any of claims 7-10, **characterized in that** at least one of the satellite buses has solar panels (7) and or antennas (8), attached to the top and bottom part of the frame (3) of its chassis (6).

Figure 1

Figure 2

Figure 3

Figure 4

Figure 5

Figure 6

Figure 7

Figure 8

Figure 9

Figure 10

Figure 11

Figure 12

Europäisches Patentamt

European Patent Office

Office européen des brevets

# EUROPEAN SEARCH REPORT

**Application Number**

EP 25 16 1481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 112 193 441 A (HARBIN INST TECHNOLOGY) 8 January 2021 (2021-01-08) * the whole document * | 1-11 | INV. B64G1/10 B64G1/50 B64G1/66 |
| Y | CN 107 697 317 A (SHANGHAI OK SPACE TECH CO LTD) 16 February 2018 (2018-02-16) * the whole document * | 1-11 | |
| Y | PANG WEIJIAN ET AL: "Thermal Control of Modular Microsatellites: Technologies and Techniques", 2024 10TH INTERNATIONAL CONFERENCE ON CONTROL, AUTOMATION AND ROBOTICS (ICCAR), IEEE, 27 April 2024 (2024-04-27), pages 268-276, XP034626991, DOI: 10.1109/ICCAR61844.2024.10569571 [retrieved on 2024-06-28] * page 272, section A, point 3) * | 9,10 | |
| Y | EP 3 339 188 B1 (UNIV MONTPELLIER [FR]) 22 April 2020 (2020-04-22) * paragraphs [0005], [0022], [0050] * * figure 21 * | 11 | TECHNICAL FIELDS SEARCHED (IPC) B64G |
| A | CN 114 715 443 A (HARBIN INST TECHNOLOGY) 8 July 2022 (2022-07-08) * the whole document * | 1-11 | |
| A | US 2023/406545 A1 (GOCMEN ZEYNEP OZGE [TR] ET AL) 21 December 2023 (2023-12-21) * the whole document * | 1-11 | |
| A | CN 112 591 144 A (INNOVATION ACADEMY FOR MICROSATELLITES OF CAS ET AL.) 2 April 2021 (2021-04-02) * the whole document * | 1-11 | |

-/--

The present search report has been drawn up for all claims

| Place of search | Date of completion of the search | Examiner |
|---|---|---|
| Munich | 3 July 2025 | Weber, Carlos |

EPO FORM 1503 03.82 (P04C01)

Europäisches
Patentamt

European
Patent Office

Office européen
des brevets

# EUROPEAN SEARCH REPORT

Application Number

EP 25 16 1481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 665 845 A (SHANGHAI SATELLITE ENG INST) 19 November 2021 (2021-11-19) * the whole document * ----- | 1-11 | |
| A | CN 113 650 807 A (CHINA ACADEMY SPACE TECHNOLOGY) 16 November 2021 (2021-11-16) * the whole document * ----- | 1-11 | |

TECHNICAL FIELDS
SEARCHED (IPC)

The present search report has been drawn up for all claims

| Place of search | Date of completion of the search | Examiner |
|---|---|---|
| Munich | 3 July 2025 | Weber, Carlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 16 1481

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2025

| Patent document cited in search report | | Publication date | Patent family member(s) | | Publication date |
|---|---|---|---|---|---|
| CN 112193441 | A | 08-01-2021 | NONE | | |
| CN 107697317 | A | 16-02-2018 | NONE | | |
| EP 3339188 | B1 | 22-04-2020 | EP | 3339188 A1 | 27-06-2018 |
| | | | ES | 2806626 T3 | 18-02-2021 |
| | | | WO | 2018115180 A1 | 28-06-2018 |
| CN 114715443 | A | 08-07-2022 | NONE | | |
| US 2023406545 | A1 | 21-12-2023 | AR | 124490 A1 | 05-04-2023 |
| | | | EP | 4267467 A1 | 01-11-2023 |
| | | | TR | 202022063 A1 | 21-07-2022 |
| | | | US | 2023406545 A1 | 21-12-2023 |
| | | | WO | 2022146279 A1 | 07-07-2022 |
| CN 112591144 | A | 02-04-2021 | NONE | | |
| CN 113665845 | A | 19-11-2021 | NONE | | |
| CN 113650807 | A | 16-11-2021 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 3339188 B1
- ES 2806626 T3
- US 9248924 B
- US 11492147 B2